Europäisches Patentamt

(19) European Patent Office

Office européen des brevets

(11) Publication number: **0 087 250**
**A1**

# (12) EUROPEAN PATENT APPLICATION

(21) Application number: **83300704.0**

(22) Date of filing: **11.02.83**

(51) Int. Cl.³: **A 01 M 1/02**
**A 01 M 1/04**

(30) Priority: **16.02.82 US 348846**

(43) Date of publication of application:
**31.08.83 Bulletin 83/35**

(84) Designated Contracting States:
**DE FR GB IT**

(71) Applicant: McBrayer, Carl L.
428 Grand Street
Redwood City California 94062(US)

(72) Inventor: McBrayer, Carl L.
428 Grand Street
Redwood City California 94062(US)

(74) Representative: Bayliss, Geoffrey Cyril et al,
BOULT, WADE & TENNANT 27 Furnival Street
London EC4A 1PQ(GB)

(54) **Method and means for killing flying insects and for discharging an attractant therefrom.**

(57) A method and means for killing flying insects and for discharging an attractant is disclosed. The killing means consists of an enclosure (11) having a top opening (12) over which a guard (13) extends having a skirt (13a) extending into the enclosure. A motor (14) mounted on the guard rotates an elongate wire-like element (17) disposed immediately below the skirt at high enough speed to prevent passage of an insect across the plane defined by the rotating element. The path of the ends of the element is encircled by a wall (11b) of the enclosure and the element strikes insects passing across the plane defined by the element and deflects them against the wall. Impacting the insects against the wall generates an attractant which the rotating element (17) serves to pump into the atmosphere.

FIG. 1

-1-

## METHOD AND MEANS FOR KILLING FLYING INSECTS
## AND FOR DISCHARGING AN ATTRACTANT THEREFROM

This invention pertains to a method and means for killing flying insects and more particularly to such a method and means wherein an attractant is propagated from the method of killing.

Heretofore, when it has been desired to kill flying insects, chemical sprays and the like have been required. However, where flying insects need to be killed around food in preparation or the like, the use of such chemical sprays can contaminate the food.

Accordingly, there has been a need for an improved method and means for killing flying insects in a non-contaminating manner.

Chemical attractants for causing flying insects to move toward a given source have been known. However, the use of such chemical attractants also includes the risk of contamination.

Accordingly, it is desirable to have a mechanical method and means for killing flying insects and for propagating an attractant of a non-chemical nature.

In general, as disclosed herein, a method and mechanical means for killing flying insects serves to propagate an attractant therefrom. An elongate wire-like element mounted for rotation about a point intermediate the ends thereof defines an imaginary plane. A motor rotates the element at a speed sufficient to preclude the flying insects from passing across the plane. The element strikes and kills any such insects deflecting parts of them to smash against a wall surface surrounding and adjacent to the path defined by the tips of the element. The insect parts being smashed against the wall generate a sex attractant therefrom which is carried into the atmosphere by air currents generated by rotation of the element. The insect parts also provide a protein bait.

It is a general object of the invention to provide an improved method and means for attracting and killing flying insects.

Another object of the invention is to provide a method and means for mechanically killing flying insects and propagating an attractant therefrom.

Yet another object of the invention is to provide apparatus for attracting and killing flying insects by rotating blade means serving to kill the insects and to provide a flow of air therefrom for carrying an attractant to the environs.

The foregoing and other objects of the invention shall become more readily evident from the following detailed description of a preferred embodiment when considered in conjunction with the drawings.

Figure 1 shows a diagrammatic perspective view of a machine for mechanically killing flying insects according to the invention;

**0087250**

Figure 2 shows an elevation center line section view of the structure shown in Figure 1 according to the invention;

Figure 3 shows a diagrammatic perspective view of a detail pertaining to the mounting of a rotatable wire-like element; and

Figure 4 shows an enlarged detail view, in section, taken along the lines 4-4 of Figure 2.

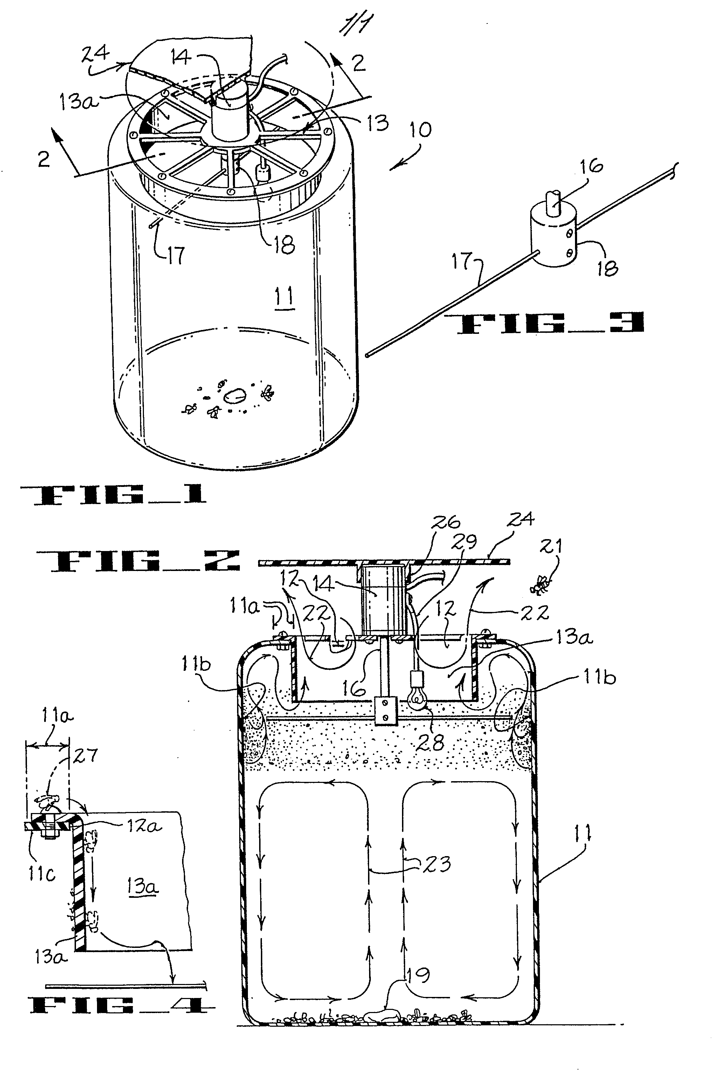

The machine 10 for mechanically killing flying insects such as flies, bees, wasps and the like and for propagating an attractant therefrom includes an enclosure 11 of clear material. Enclosure 11 preferably is formed from a transparent material, such as glass or plastic for reasons noted below. The top of enclosure 11 includes a relatively large opening 12. The edge margin 11a surrounding opening 12 supports a guard 13. Guard 13 includes a downwardly extending skirt 13a for purposes explained further below.

An electric motor 14 supported by guard 13 includes a spindle 16 disposed axially of enclosure 11.

Means for supporting an elongate wire-like element 17 for rotation includes the chuck or hub 18 mounted to spindle 16. Preferably, element 17 is made from a length of piano wire on the order of 0.025 inch diameter. Element 17 is of a length whereby the path defined by the tips thereof lies adjacent to an inner sidewall portion 11b of enclosure 11.

A cover 24 having a cup shaped central portion 26 snaps onto the upper end of motor 14 to prevent a person from inserting their fingers into the plane of movement of element 17. Cover 24 also prevents enclosure 11 from collecting rain water.

In operation, for example, where it is desired to attract and destroy flies, a piece 19 of chicken liver, hamburger or the like can be disposed within enclosure 11 to initially attract a fly or two. Motor 14 is operated at a speed sufficient to prevent flies from passing across the plane defined by the rotating element 17, preferably on the order of 3,000 rpm. The rotation of element 17 serves to draw air downwardly generally alongside motor 14 and to discharge the air upwardly at a radially outer position shown by the arrows 22. In addition air is circulated across the collection of dead flies lying on the bottom of enclosure 11, as shwon by the air currents 23.

It has been observed that the dead flies provide a protein attractant or bait as well as the sex attractant noted. Thus, air currents 23 assist in propagating additional attractant.

As a fly passes into the plane of rotation of element 17, element 17 kills the fly and deflects parts of it to the inner wall portion 11b where they are smashed upon impact. It has been discovered that by killing flies and other flying insects in this manner a sex attractant is generated adapted to become entrained in the flow of air out of enclosure 11.

The back or outer surface of skirt 13a extends sufficiently downwardly toward element 17 as to intercept parts of the flies which ricochet from wall portion 11b toward motor 14. It has been observed that if motor 14 becomes splattered with parts of the dead insects it provides a diversion to the entering flies.

In addition, the axial extent of skirt 13a must be sufficient to encourage the insect to fly into enclosure rather than to walk into it. Thus, some flies land upon enclosure 11 as noted at 27 in Figure 4. Without a proper skirt 13a, fly 27 can walk around the edge 12a and upside down along

the undersurface 11c of enclosure 11 and eventually downwardly along the inner wall surface 116. However, with the
elongate skirt 13a it has been noted that the flies tend
not to choose to walk, but fly. Then, on taking off they
fly into element 17.

Further, the elongate skirt 13a tends to keep the walking
flies from backing out.

In addition, a light 28 connected by leads 29 from motor 14
serves to attract night flying insects to be killed in the
same manner and generate both a sex attractant and protein
attractant therefrom.

Accordingly, machine 10 carries out the method of killing
flying insects following the steps of rotating an elongate
wire-like element to generally define an imaginary plane at
a rate sufficient to prevent the insects from flying through
the plane. The rotating element strikes the insects attempting to fly across the plane. The wire-like element
kills and deflects the insects to be smashed against a
surrounding sidewall. Thus, the insects are impacted
against the sidewall in a manner serving to generate an
attractant therefrom and the attractant is pumped into the
atmosphere by rotation of element 17.

From the foregoing it will be readily evident that there has
been provided an improved means for safely mechanically
killing flying insects and for drawing the insects thereto.

It has been observed that the machine as described above has
been capable of drawing insects, such as flies, from as far
away as several miles. Accordingly, it will be readily
evident that a machine of the kind described can be useful
in removing a bothersome population of flying insects from a
local area, such as a picnic ground or the like, while at
the same time remaining entirely safe with respect to contaminating the area in which it operates. It has been
further observed that flies as thus attracted pay little or
no attention to open food even when located adjacent the
enclosure 11.

CLAIMS:

1. Apparatus for killing flying insects and for propagating an attractant therefrom comprising means for supporting and rotating an elongate wire-like element to generally define an imaginary plane at a rate sufficient to prevent the insects from flying through the plane, means forming an upstanding wall surrounding and adjacent to the path defined by the tips of said rotating element, said element serving to deflect insects attempting to fly across said plane to smash said insects against said wall for generating an attractant therefrom, said rotating element serving to pump said attractant into the atmosphere.

2. The method of killing flying insects and for propagating an attractant therefrom comprising the steps of rotating an elongate wire-like element to generally define an imaginary plane at a rate sufficient to prevent the insects from flying through the plane, surrounding the path of said element with an upstanding wall, striking insects attempting to fly across the plane with said element to kill and deflect the insects and impacting same against said wall to generate an attractant therefrom and pumping said attractant into the atmosphere.

3. A machine for killing flying insects and propagating an attractant therefrom comprising means forming an enclosure having an opening leading into said enclosure, motive means carried by said enclosure and disposed substantially centrally of said opening, an elongate wire-like element coupled to said motive means to be rotated within said enclosure substantially in a plane lying across said opening and at a rate sufficient to substantially preclude any such insect from flying across said plane, said element serving to deflect any such insect to strike the inner sidewall of said enclosure with sufficient impact to develop an attractant therefrom, said element further serving to pump said attractant into the atmosphere.

4. A machine for killing flying insects and propagating an attractant therefrom according to Claim 3 including a light disposed adjacent said machine for attracting night flying insects to said machine.

5. Apparatus for killing flying insects and for propagating an attractant therefrom comprising means for supporting and rotating an elongate wire-like element to generally define an imaginary plane at a rate sufficient to prevent the insects from flying through the plane, lighting means disposed adjacent the last named means for attracting night flying insects, means forming an upstanding wall surrounding and adjacent to the path defined by the tips of said rotating element, said element serving to kill and deflect insects attempting to fly across said plane to smash said insects against said wall for generating an attractant therefrom, said rotating element serving to pump said attractant into the atmosphere.

0087250

FIG_1

FIG_2

FIG_3

FIG_4

**0087250**
Application number

European Patent
Office

**EUROPEAN SEARCH REPORT**

EP 83 30 0704

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 123 933 (T.M. ROCHE) <br> * Column 1, lines 52-65; figures 1,3 * <br> --- | 1-5 | A 01 M 1/02 <br> A 01 M 1/04 |
| X | US-A-3 807 083 (L.W. SMITH et al.) <br> * Column 2, lines 21-41; figures 1,3 * <br> --- | 1-5 | |
| A | US-A-4 251 945 (G.W. TASMA) <br> --- | | |
| A | US-A-3 987 578 (C. RUEFF) <br> ----- | | |

TECHNICAL FIELDS
SEARCHED (Int. Cl. ³)

A 01 M

The present search report has been drawn up for all claims

| Place of search | Date of completion of the search | Examiner |
|---|---|---|
| THE HAGUE | 18-05-1983 | NEHRDICH H.J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82